# EUROPÄISCHE PATENTSCHRIFT

(11) **EP 0 819 893 B1**
(45) Veröffentlichungstag und Bekanntmachung des Hinweises auf die Patenterteilung: **24.11.2004**
(21) Anmeldenummer: 97112310.4
(22) Anmeldetag: 17.07.1997
(51) Int. Cl.: F24D 11/00

(54) **Heizungsanlage**
Heating installation
Installation de chauffage

(30) Priorität: 17.07.1996 DE 19628818
(43) Veröffentlichungstag der Anmeldung: 21.01.1998
(73) Patentinhaber: Sauter, Alois, 88410 Bad Wurzach (DE)
(72) Erfinder: Sauter, Alois, 88410 Bad Wurzach (DE)
(74) Vertreter: Pfister, Helmut, Dipl.-Ing.

(56) Entgegenhaltungen:
- EP-A- 0 455 184
- EP-A- 0 683 362
- DE-A- 2 749 853
- DE-A- 4 438 970
- DE-U- 9 418 656

## Beschreibung

Die Erfindung betrifft eine Heizungsanlage zum Erzeugen von Heizwärme und/oder Warmwasser, mit wenigstens einem Wärmeerzeuger, wenigstens einem Wärmeverbraucher und wenigstens einem als Schichtspeicher ausgebildeten Wärmespeicher mit heißen, kalten und mittleren Temperaturzonen, wobei die heiße Temperaturzone des Wärmespeichers über eine Einführstelle direkt oder indirekt von dem Wärmeerzeuger beheizbar ist, und der Wärmeverbraucher direkt oder indirekt über eine Entnahmestelle in der heißen Temperaturzone mit Wärme beaufschlagbar ist. ruhigungskammern sind über vertikale Anordnungen von Vorlauf-Einströmkammeröffnungen und Rücklauf-Einströmkammeröffnungen verbunden. Weiterhin ist eine weitere Entnahmestelle in der kalten und/oder mittleren Temperaturzone für die direkte oder indirekte Wärmebeaufschlagung wenigstens eines weiteren Wärmeverbrauchers vorgesehen.

Aus der Druckschrift DE-A 27 49 853 ist ein Wärmeschichtspeicher bekannt, der konisch ausgebildet in Steigrichtung des Warmwassers angeordnete Trennwände aufweist, die mittig eine Öffnung besitzen, durch die aufsteigendes Warmwasser im Behälter aufsteigen kann und zum anderen dafür vorgesehen sind, daß die Rohrschlangen des Wärmetauschers durch diese Öffnungen geführt werden können. Eine Unterteilung in Teilwärmespeicher zur optimalen Ausnutzung der unterschiedlichen Temperaturbereiche ist dieser Druckschrift nicht zu entnehmen.

Es ist bekannt, daß die verschiedenen Wärmeverbraucher von Heizungsanlagen auf unterschiedlichen Temperaturniveaus arbeiten. So benötigt die Warmwasseraufbereitung in der Regel das höchste Temperaturniveau, während die Heizkreise beispielsweise für herkömmliche Heizköperradiatoren lediglich geringere Vorlauftemperaturen erfordern. Die Heizschlangen von Fußbodenheizungen arbeiten im allgemeinen auf einem noch niedrigeren Temperaturniveau.

Bei herkömmlichen vorbekannten Heizungsanlage ist stets vorgesehen, die erforderlichen geringeren Vorlauftemperaturen durch Mischen der entsprechenden Wärmeübertragungsmedien aus der heißen und kalten Temperaturzone einzustellen. Dies hat den Nachteil, daß stets eine ausreichende Menge an heißem Wärmeübertragungsmedium bereitgehalten werden muß. Dementsprechend muß die heiße Temperaturzone relativ groß bemessen sein. Die mittlere Temperaturzone dient bei herkömmlichen Heizungsanlagen mit einem derartigen Wärmeschichtspeicher lediglich zum Einleiten von erwärmten Wärmeübertragungsmedien geringerer Temperatur, beispielsweise aus Solaranlagen oder dem letzten Wärmeaustauscher aus Brennwertkesseln.

Der Erfindung liegt die Aufgabe zugrunde, eine Heizungsanlage der eingangs geschilderten Art so zu verbessern, daß eine bessere Ausnutzung des Schichtspeichers bewirkt werden kann.

Die Aufgabe der Erfindung wird durch eine Heizungsanlage zum Erzeugen von Heizwärme und/oder Warmwasser, mit wenigstens einem Wärmeerzeuger, wenigstens einem Wärmeverbraucher und wenigstens einem als Schichtspeicher ausgebildeten Wärmespeicher mit heißen, kalten und mittleren Temperaturzonen gelöst, wobei die heiße Temperaturzone des Wärmespeichers über eine Einführstelle direkt oder indirekt von dem Wärmeerzeuger beheizbar ist, und der Wärmeverbraucher direkt oder indirekt über eine Entnahmestelle in der heißen Temperaturzone mit Wärme beaufschlagbar ist, wobei wenigstens eine weitere Entnahmestelle in der kalten und/oder mittleren Temperaturzone für die direkte oder indirekte Wärmebeaufschlagung wenigstens eines weiteren Wärmeverbrauchers vorgesehen ist, welche sich dadurch auszeichnet, daß der Wärmespeicher entsprechend seiner Temperaturzonen zur Unterdrückung von Konvektionsströmung in eine Mehrzahl kaskadisch geschalteter Teilwärmespeicher unterteilt ist und diese Teilwärmespeicher mit unterschiedlichen Volumina als einzelne Teilwärmespeicher ausgebildet und durch entsprechende Verbindungsleitungen miteinander verbunden sind, derart, daß der jeweils kältere Bereich eines Teilwärmespeichers mit dem heißeren Bereich des folgenden Teilwärmespeichers verbunden ist. Durch die so erfindungsgemäß vorgenommene Ausgestaltung des Wärmespeichers ist eine optimale Ausnutzung des in dem wärmeschichtspeicher in den unterschiedlichen Teilvoluminas enthaltenen Temperaturpotentials zu erreichen. Insbesondere wird verhindert, daß durch die kaskadische Anordnung der Teilwärmespeicher eine Konvektionsströmung zwischen den einzelnen Teilwärmespeichern stattfindet. Damit wird eine optimale Ausnutzung der in den jeweiligen Temperaturzonen vorhandenen Energiepotentiale erreicht. Die Ausgestaltung einer kaskadischen Verbindung der Teilwärmespeicher untereinander hat weiterhin den Vorteil, daß die erfindungsgemäße Heizungsanlage in bestehende Gebäude eingebaut werden kann, die unter Umständen keinen ausreichenden Platz für das Aufstellen eines großen Schichtspeichers besitzen. Insofern ist hierbei die modulare Ausbildung der Wärmespeicher von besonderer Bedeutung. Jedes Modul deckt dabei ein entsprechendes Temperaturintervall ab. Die einzelnen Wärmespeicher selbst sind entsprechend gedämmt und mit anderen Teilwärmespeichern, die benachtbarten Temperaturniveaus beziehungsweise Temperaturzonen dienen, durch Rohrleitungen verbunden. Wie bereits erwähnt, führt die erfindungsgemäße vorteilhafte modulare Ausgestaltung auch zu einer Vermeidung von Konvektionsströmung, die zu Entropieverlusten führen würde.

Die erfindungsgemäße Ausgestaltung hat den Vorteil, daß ein Wärmeverbraucher, der auf einem relativ niedrigen Temperaturniveau arbeitet, unmittelbar aus der mittleren Temperaturzone mit Wärme beaufschlagt werden kann. Eine Entnahme aus der heißen Zone ist nicht erforderlich, so daß diese heiße Zone entsprechend kleiner dimensioniert sein kann. Auch braucht lediglich eine geringere Menge heißes Wärmeübertragungsmedium bereitgehalten zu werden.

So kann gemäß einer Ausführungsform der Erfindung vorgesehen werden, daß wenigstens ein Heizkreis direkt oder indirekt mit einem Wärmeübertragungsmedium aus einer Entnahmestelle in der mittleren oder kälteren Temperaturzone beaufschlagbar ist, während die Warmwasserbereitung direkt oder indirekt mit einem Wärmeübertragungsmedium aus einer Entnahmestelle in der heißen Temperaturzone beaufschlagbar ist.

Es ist auch vorgesehen, daß die Entnahmestelle in der kalten und/oder mittleren Temperaturzone über eine Mischeinrichtung in Verbindung mit der Entnahmestelle in der mittleren und/oder heißen Temperaturzone steht. Dies hat den Vorteil, daß beispielsweise bei einer zu hohen Temperatur in der heißen Temperaturzone die Temperatur des entnommenen Wärmeübertragungsmediums gesenkt werden kann. Dadurch kann die Menge des aus der heißen Temperaturzone zu entnehmenden Wärmeübertragungsmediums verringert werden. Insbesondere dann, wenn in dem mittleren Temperaturniveau verhältnismäßig geringere Volumen zur Verfügung stehen kann es von Vorteil sein, das in der heißen Temperaturzone entnommene Wärmeübertragungsmedium mit einem verhältnismäßig kalten Wärmeübertragungsmedium, zum Beispiel aus der kalten Temperaturzone zu mischen. Dadurch wird erreicht, daß unabhängig von den Heizquellen die Wärme optimal für die Wärmeverbraucher zur Verfügung gestellt wird ohne hierbei zu große Verluste zu erzeugen. Eine optimale Ausnützung der erzeugten Wärme wird dadurch erreicht, daß die Wärme mit einem gewissen Temperaturniveau möglichst mit diesem Temperaturniveau den Wärmeverbrauchern angeboten wird. Ist es jedoch notwendig ein höheren oder niedrigeres Temperaturniveau zur Verfügung zu stellen, wird dies durch eine entsprechend intelligent ausgestaltete Mischeinrichtung erreicht. Die Mischeinrichtung ist hierbei in der Lage, entweder das Wärmeübertragungsmedium der heißen Temperaturzone herabzumischen, oder aber das Wärmeübertragungsmedium der mittleren Temperaturzone entsprechend auf- oder abzumischen. Hierdurch wird eine den unterschiedlichen Wärmequellen angepaßte Wärmestromführung erreicht, wodurch eine günstige Wärmeausnutzung und damit ein günstiger Wirkungsgrad erreicht wird.

Es ist auch günstig, wenn wenigstens eine zweite weitere Entnahmestelle in der mittleren Temperaturzone bei einer Temperatur angeordnet ist, die höher als die für die erste Entnahmestelle in der mittleren Temperaturzone ist, und welche zweite Entnahmestelle mit der ersten Entnahmestelle über eine Mischeinrichtung in Verbindung steht. Dies hat den Vorteil, daß eine flexible Anpassung der Temperatur der entnommenen Wärmeübertragungsmedien an den jeweiligen Bedarf erfolgen kann, ohne daß bei erforderlichen höheren Temperaturen die Entnahme von dem Wärmeübertragungsmedium aus der heißen Temperaturzone erforderlich wird.

Es kann aber auch vorgesehen werden, daß wenigstens eine zusätzliche Entnahmestelle in der heißen Temperaturzone angeordnet ist, welche zusätzliche Entnahmestelle mit der wenigstens einen ersten oder zweiten Entnahmestelle in der mittleren Temperaturzone über eine Mischeinrichtung in Verbindung steht. Dies kann insbesondere bei plötzlichen Belastungen der Heizungsanlage zweckmäßig sein, wenn das Temperaturniveau in der mittleren Zone nicht mehr ausreichend hoch ist.

Gemäß einer weitergehenden Ausführungsform ist vorgesehen, daß die Mischeinrichtung und/oder die Mischeinrichtungen mit wenigstens einer Steuereinrichtung in Verbindung steht bzw. stehen, um das Mischungsverhältnis der Wärmemengenströme aus den Entnahmestellen in Abhängigkeit von der benötigten Temperatur und/oder dem benötigten Wärmebedarf einzustellen. Es kann aber auch alternativ oder zusätzlich die Steuereinrichtung mit wenigstens einer Temperaturmeßeinrichtung verbunden sein, die zumindest im Bereich einer Entnahmestelle des Wärmespeichers angeordnet ist, um die Temperatur dort zu erfassen und die Wärmemengenströme aus den verschiedenen Entnahmestellen in Abhängigkeit von der erfaßten Temperatur einzustellen. Dadurch wird in vorteilhafter Weise erreicht, daß aus dem Wärmespeicher stets ein Wärmeübertragungsmedium mit der entsprechend erforderlichen Temperatur entnommen wird.

Die in einer vorteilhaften Ausgestaltung der Erfindung vorgesehene Steuereinrichtung wirkt hierbei mit mehreren Temperatursensoren zusammen, die bevorzugterweise in den Zuleitungen bzw. Einmündungen dieser Zuleitungen in den Wärmespeicher angeordnet sind. Die Steuereinrichtung überwacht hierbei sowohl die Temperaturniveaus der Wärmeerzeugerrückläufe, wie auch das benötigte Temperaturniveau der Wärmeverbraucher. Die Steuereinrichtung ist hierbei in der Lage dynamisch sich veränderten Umständen anzupassen. In gleicher Weise ist die Steuereinrichtung auch in der Lage die Wärmeströme von verschiedenen Wärmequellen, zum Beispiel einer Wärmepumpe, einer Solaranlage, eines normalen Brennkessels bzw. einer Rauchgaskühlung, die Abwärme einer Klimaanlage und dergleichen untereinander so abzustimmen, daß die entsprechend benötigten Temperaturniveaus aufgefüllt bzw. angeboten werden.

Die Steuereinrichtung wirkt hierbei auf eine Mischeinrichtung. In gleicher Weise ist es möglich eine vereinfachte, billige Steuermischeinrichtung zum Beispiel durch zwei oder mehrere zusammengeschaltete Reglerventile zu realisieren. Es geht letztendlich darum, eine flexible, dynamische Anpassung der verschiedenen Wärmeübertragungsmedienströme und eine entsprechende Durchmischung der Wärmeströme zu erreichen. Die so beschriebene Steuereinrichtung bzw. Mischeinrichtung weist diese Funktionalität auf.

Gemäß einer Ausgestaltung der Erfindung weist der Wärmeerzeuger einen Brennwertkessel auf, dessen letzter Wärmeaustauscher in Rauchgasrichtung zum Kondensieren der Rauchgase von einem aus der kalten Temperaturzone stammenden Wärmeübertragungsmedium gespeist wird, wobei der warme Ausgang des Wärmeaustauschers in Verbindung mit einer Einführstelle für das Wärmeübertragungsmedium in der mittleren Temperaturzone steht. Hierdurch kann der Brennwertkessel in günstiger Weise mit dem Wärmespeicher kombiniert werden.

Ferner kann vorgesehen werden, daß der Wärmeerzeuger eine Solaranlage umfaßt, die wenigstens einen Wärmeaustauscher aufweist, um ein aus der kalten Temperaturzone des Wärmespeichers stammendes Wärmeübertragungsmedium zu erhitzen, wobei der warme Ausgang des Wärmeaustauschers mit einer Ventileinrichtung verbunden ist, an der eine Einführstelle in der heißen Temperaturzone und eine Einführstelle in der mittleren Temperaturzone des Wärmespeichers angeschlossen ist und die über eine temperaturabhängige Steuereinrichtung einstellbar ist, um das erhitzte Wärmeübertragungsmedium in Abhängigkeit von dessen Temperatur an der entsprechenden Einführstelle in den Wärmespeicher einzuleiten. Hierdurch ist es möglich, daß die Solaranlage in Abhängigkeit von der Sonneneinstrahlung den Wärmespeicher stets mit Energie speisen kann. Insbesondere kann die nunmehr stärker beanspruchte mittlere Temperaturzone auch bei geringerer Sonneneinstrahlung erwärmt werden.

Ohnehin erscheint in diesem Zusammenhang die kombinierte Verwendung eines Brennwertkessels mit einer Solaranlage günstig, da bei starker Sonneneinstrahlung die Wärmeerzeugung durch die Solaranlage überwiegt, während bei Nacht oder bedecktem Wetter der Brennwertkessel häufiger laufen wird. Dies führt dazu, daß aus der kalten Zone nicht übermäßig viel kaltes Wärmeübertragungsmedium abgezogen wird, da beide Anlagen selten oder nur kurzfristig gleichzeitig laufen werden.

Es kann zur besseren Anpassung an die vorherrschenden Temperaturen der in den Wärmespeicher einzuführenden Wärmeübertragungsmedien vorgesehen werden, daß der Wärmespeicher wenigstens zwei übereinander angeordnete Einführstellen in der mittleren Temperaturzone hat, die über eine Ventileinrichtung mit einem warmen Ausgang eines Wärmeaustauschers des Wärmeerzeugers stehen, welche Ventileinrichtung durch eine temperaturabhängige Steuereinrichtung einstellbar ist, um die Einführstelle für das Wärmeübertragungsmedium in Abhängigkeit von dessen Temperatur auszuwählen. Gemäß einer alternativen oder zusätzlichen Ausführungsform kann es weiterhin zweckmäßig sein, wenn der Wärmespeicher wenigstens zwei übereinander angeordnete Einführstellen in der mittleren Temperaturzone hat, die über eine Ventileinrichtung mit einem warmen Ausgang eines Wärmeaustauschers des Wärmeerzeugers stehen, welche Ventileinrichtung durch eine Steuereinrichtung einstellbar ist, die mit wenigstens einer Temperaturmeßeinrichtung verbunden ist, die zumindest die Temperatur im Bereich einer Einführstelle des Wärmespeichers erfaßt, um die Einführstelle für das Wärmeübertragungsmedium in Abhängigkeit von der Temperatur des Wärmespeichers an einer Einführstelle auszuwählen.

Es ist von Vorteil, wenn ein einziges Wärmeübertragungsmedium zur Wärmebeaufschlagung der Wärmeverbraucher und zur Wärmebeaufschlagung durch den Wärmeerzeuger vorgesehen ist. Diese Wärmeübertragungsmedium wird somit stets im Kreislauf geführt, so daß Probleme beispielsweise durch Kalkablagerungen und/oder Gaseinschlüsse nicht zu erwarten sind. Weiterhin kann vorgesehen werden, daß das Wärmeübertragungsmedium gleichzeitig die Füllung des Wärmeschichtspeichers bildet. Dies hat den Vorteil, daß auf aufwendige Einbauten innerhalb des Wärmespeichers vers zichtet werden kann.

In einer weiteren Ausgestaltung der Erfindung ist vorgesehen, daß der Wärmespeicher entsprechend seinen Temperaturzonen unterteilt ist und diese Teilwärmespeicher kaskadisch miteinander verbunden sind. Diese Ausgestaltung hat den Vorteil, daß eine erfindungsgemäße Heizungsanlage auch zum Beispiel in bestehende Gebäude eingebaut werden kann, die unter Umständen keinen ausreichenden Platz für das Aufstellen eines großen Schichtspeichers besitzen. Bei einer solchen Ausgestaltung würde dann ein modularer Wärmespeicher Verwendung finden, wobei jedes Modul ein entsprechendes Temperaturintervall abdeckt. Die Wärmespeicher selber sind dann entsprechend gedämmt und mit weiteren Teilwärmespeichern, die benachbarten Temperaturniveaus bzw. Temperaturzonen dienen, durch Rohrleitungen verbunden. Neben der vorteilhaften modularen Ausgestaltung wird aber durch diese Anordnung auch eine unerwünschte Konvektionsströmung, die zu Entropieverlusten führen würde, zuverlässig vermieden.

Hierbei ist vorgesehen, daß das Volumen der Teilwärmespeichern unterschiedlich ist. Entsprechend den Möglichkeiten der Heizquellen und der Anforderung des zu beheizenden Gebäude bzw. Wärmeverbrauchern kann somit jedes Temperaturintervall bzw. jede Temperaturzone individuell angepaßt und ausgelegt werden. Dies führt zu einer optimalen Ausnutzung der Ressourcen und zu günstigen Wirkungsgraden.

Es wird in dieser Anmeldung von unterschiedlichen Temperaturzonen bzw. Temperaturintervallen gesprochen. Diese werden allgemein mit kalt, warm oder mittleren Temperaturzonen beschrieben, wobei eine genaue Temperaturangabe aufgrund der wechselnden Einsatzbereiche der Heizungsanlage und der flexiblen Anpassung dieser Anlage auf die jeweiligen Anwendungszwecke schwer möglich ist. Üblicherweise wird versucht das Wärmeübertragungsmedium, zum Beispiel Wasser, im Bereich seiner flüssigen Phase im gesamten Temperaturintervall von 0 bis 100° C zu verwenden. Es ist auch vorgesehen, das Wasser zum Beispiel in der Dampfphase ebenfalls zu verwenden. Die angegebenen Graduierungen geben jedoch eine relative Lage der Temperaturzonen untereinander an, was für den Fachmann ausreichend ist um die Erfindung entsprechend benützen zu können.

In einer weiteren Ausgestaltung der Erfindung ist vorgesehen, daß der Rücklauf des Wärmeerzeugers unmittelbar oder mittelbar, insbesondere durch eine Mischeinrichtung, mit dem Zulauf eines Wärmeverbrauchers verbunden ist. Durch eine solche Ausgestaltung wird erreicht, daß die erzeugte Wärme nicht in einen Wärmespeicher eingespeist wird, sondern dirket bei Bedarf den Wärmeverbrauchern zur Verfügung gestellt wird. Dies kann zum Beispiel bei der Anwendung von Solarkollektoren oder Wärmepumpen von Vorteil sein, die ein verhältnismäßig niedriges, dafür aber dauerhaftes Temperaturniveau zur Verfügung stellen. Im Falle, daß der Wärmeverbraucher abgeschaltet wird, wird dann über die Steuereinrichtung bzw. die Mischeinrichtung als Stellglied der Wärmestrom in den Wärmespeicher umgelenkt. Gleichwohl ist es auch möglich, das Temperaturniveau durch entsprechende Mischeinrichtungen vor dem Wärmeverbrauer zu erhöhen.

Besonders günstig ist es, wenn der Rücklauf eines Wärmeverbrauchers unmittelbar oder mittelbar, insbesondere durch Mischeinrichtungen, mit dem Zulauf eines weiteren Wärmeverbrauchers verbunden ist. Oftmals ist es ausreichend, zum Beispiel den Rücklauf einer Heißwasserheizkörperheizung als Vorlauf zum Beispiel für eine Fußbodenheizung zu verwenden. Wenn nötig, kann auch eine unmittelbare Verbindung durch eine Mischeinrichtung ergänzt werden, um zum Beispiel den Zulauf für den nachgeschalteten Verbraucher auf ein anderes Temperaturniveau zu setzen. Hierzu wird zum Beispiel kaltes oder wärmeres Wasser als Wärmeübertragungsmedium hinzugemischt.

In der Zeichnung ist die Erfindung schematisch dargestellt. Es zeigen:
- Fig.1: ein Blockschaltbild einer erfindungsgemäßen Heizungsanlage,
- Fig. 2: ein Blockschaltbild einer Variante der erfindungsgemäßen Heizungsanlage, wobei der Wärmespeicher in mehrere Teilspeicher unterteilt ist und
- Fig. 3, 4: Blockschaltbilder weiterer Varianten der erfindungsgemäßen Heizungsanlage.

In der Zeichnung sind die benötigten Umwälzpumpen, Stellventile und Rückschlagventile der Übersichtlichkeit halber nicht dargestellt. Der Einbau derartiger Einrichtungen sind dem Fachmann jedoch bekannt und bedürfen daher keiner weiteren Erläuterung.

Die dargestellte Heizungsanlage weist einen Wärmeschichtspeicher 11 auf, der mit einer Wärmeerzeugungseinrichtung 12 auf der in der Zeichnung rechten Seite und mehreren Wärmeverbrauchern 13 auf der in der Zeichnung linken Seite des Wärmespeichers 11 zusammenwirkt. Der Wärmespeicher 11 ist als vertikale Säule ausgebildet, in der das Wärmeübertragungsmedium, z. B. Wasser, eingefüllt ist. Aufgrund der unterschiedlichen Einführstellen und Entnahmestellen ergibt sich die gewünschte ungleichmäßige Temperaturverteilung derart, daß sich eine obere heiße Temperaturzone 14 und eine untere kalte Temperaturzone 15 bildet. Dazwischen befindet sich eine mittlere Temperaturzone 16, in der das Wärmeübertragungsmedium mit einer Mischtemperatur vorliegt. In der Zeichnung sind die Temperaturzonen als klar getrennte Schichten dargestellt. Es ist selbstverständlich, daß diese Zonen während des Betriebes unterschiedlich groß sein können. Insbesondere wird die Temperatur im wesentlichen stetig von unten nach oben zunehmen.

Die Wärmeerzeugungseinrichtung 12 weist einen beispielsweise als Brennwertkessel 17 ausgebildeten Heizkessel auf. Ein derartiger Brennwertkessel kühlt die durch die Feuerung 18 entstehenden Rauchgase bis zur Kondensation ab, wodurch sich eine gute Energieausbeute ergibt. In Strömungsrichtung 19 des Rauchgases sind in der Regel wenigstens zwei Wärmeaustauscher 20 und 21 vorgesehen, durch welche ein Wärmeübertragungsmedium zum Aufheizen des Wärmespeichers 11 fließt.

Bei dem in der Zeichnung dargestellten Ausführungsbeispiel ist nur ein Wärmeübertragungsmedium vorgesehen, das durch die Wärmeaustauscher der Wärmeerzeugungseinrichtung 12 und auch durch die entsprechenden Wärmeaustauscher der Wärmeverbraucher 13 strömt. Dieses Wärmeübertragungsmedium bildet zudem gleichzeitig die Speicherflüssigkeit innerhalb des Wärmespeichers 11. Es ist selbstverständlich möglich, teilweise abgeschlossene und getrennte Kreisläufe eines Wärmeübertragungsmediums, beispielsweise für die Wärmekreisläufe der Wärmeerzeugungseinrichtungen einerseits und der Wärmeverbraucher andererseits vorzunehmen. Die Erfindung ist aber grundsätzlich unabhängig von solchen zusätzlichen Maßnahmen, so daß im folgenden von nur einem Wärmeübertragungsmedium die Rede ist, ohne daß damit eine Beschränkung verbunden sein soll.

Der in Strömungsrichtung des Rauchgases des Brennwertkessels 17 erste Wärmeaustauscher 20 steht mit seiner kalten Einlaßseite für das Wärmeübertragungsmedium in Verbindung mit einer Entnahmestelle 22 in der mittleren Temperaturzone 16 des Wärmespeichers 11. Während der Betriebes des Brennwertkessels 17 läuft eine nicht dargestellte Umwälzpumpe, um das erhitzte Wärmeübertragungsmedium 23 zu einer Einführstelle 24 in die obere heiße Temperaturzone 14 zu leiten. Durch die Entnahme des Wärmeübertragungsmedium aus der mittleren Temperaturzone wird u.a. ein zu starkes Abkühlen des Rauchgases vermieden, so daß dieses für die Erwärmung eines weiteren Wärmeübertragungsmediumstromes benutzt werden kann. Die Umwälzpumpe kann in bekannter Weise mit einem Verzögerungsschalter für ein Nachlaufen nach dem Abschalten des Brenners oder ein verspätetes Anlaufen nach dem Anschalten des Brenners verbunden sein, um die Restwärme auszunutzen bzw. die Startphase zu überbrücken.

Es ist weiterhin, wie bei Brennwertkesseln üblich, noch wenigstens ein in Strömungsrichtung 19 des Rauchgases letzter Wärmeaustauscher 21 vorgesehen, um die Rauchgase bis zur Kondensation abzukühlen. Da hier das gesamte Temperaturniveau entsprechend geringer ist und die Rauchgastemperatur im Abgas nur noch etwa 50°C beträgt, wird, um überhaupt eine Wärmeübertragung zu ermöglichen, der Wärmeaustauscher 21 von einer Entnahmestelle 25 in der kalten Temperaturzone 15 mit dem Wärmeübertragungsmedium gespeist. Das erwärmte Wärmeübertragungsmedium 26 fließt über eine Einführstelle 27 in die mittlere Temperaturzone 16 des Wärmespeichers 11. Bei dem in der Zeichnung dargestellten Ausführungsbeispiel liegt diese Einführstelle 27 oberhalb der Entnahmestelle 22 für den ersten Wärmeaustauscher 20. Es kann aber auch in Abhängigkeit von der Auslegung des Wärmespeichers und/oder des Brennwertkessels vorgesehen werden, daß die Einführstelle 27 unterhalb oder auf gleicher Höhe mit der Entnahmestelle 22 liegt.

Die Wärmeerzeugungseinrichtung 12 weist ferner eine Solaranlage 28 auf, um durch die einfallenden Sonnenenergie ein Wärmeübertragungsmedium in einer Sonnenkollektoranordnung 29 zu erwärmen. Der für die Kopplung an den Wärmekreislauf des Wärmespeichers 11 vorgesehene Wärmeaustauscher 30 wird an seiner kalten Einlaßseite 31 durch kaltes Wärmeübertragungsmedium gespeist, das an einer unteren Entnahmestelle 32 in der kalten Temperaturzone 15 entnommen wird. Das je nach Sonneneinstrahlung mehr oder weniger erhitzte Wärmeübertragungsmedium 33 gelangt zu einer Ventileinrichtung 34, die mit mehreren Einführstellen 35, 36 37 verbunden ist.

Im einzelnen ist die Anordnung so getroffen, daß sich die Einführstellen 36 und 37 in der mittleren Temperaturzone 16 befinden und über eine weitere Ventileinrichtung 38 miteinander gekoppelt sind. Die Einführstelle 35 befindet sich in der heißen Temperaturzone 14. Die Ventileinrichtungen 34 und 38 wirken mit nicht dargestellten temperaturabhängigen Steuereinrichtungen zusammen, die das erhitzte Wärmeübertragungsmedium 33 in Abhängigkeit von seiner Temperatur zu der Einführstelle 35 bei hoher, zu der Einführstelle 36 bei geringerer oder zu der Einführstelle 37 bei noch geringerer Temperatur leiten. Die Temperaturen im einzelnen hängen von der gesamten Auslegung der Heizungsanlage ab. Es kann beispielsweise vorgesehen werden, daß erhitztes Wärmeübertragungsmedium nur mit einer Temperatur über 60°C in die heiße Temperaturzone geleitet wird. Damit kann die durch die Sonnenkollektoren 29 gewonnene Energie optimal in den Wärmespeicherkreislauf eingebunden werden.

Die Wärmeverbraucher 13 weisen zum Erzeugen von Warmwasser 39 einen Wärmeaustauscher 40 auf, dessen warme Eingangsseite von dem Wärmeübertragungsmedium durchströmt wird, das von einer Entnahmestelle 41 in der heißen Zone 14 entnommen wird. Das abgekühlte Wärmeübertragungsmedium 42 wird dem Wärmespeicher 11 in der unteren kalten Temperaturzone 15 zugeführt. Bei der in der Zeichnung dargestellten Ausführungsform ist ferner eine Leitung 58 vorgesehen, die einerseits über eine Mischeinrichtung 59 mit der warmen Eingangsseite des Wärmeaustauschers 40 in Verbindung steht. Andererseits steht die Leitung in Verbindung mit einer Entnahmestelle 60 in der mittleren Temperaturzone 16. Hierdurch kann die Temperatur des dem Wärmeaustauscher 40 zugeführten Wärmeübertragungsmediums variiert werden.

Weiterhin sind zwei weitere Wärmeverbraucher, beispielsweise Heizkreise 43, 44 vorgesehen. Diese Wärmeverbraucher sollen hierbei lediglich ein niedrigeres Temperaturniveau als die Warmwasserbereitung 40 erfordern. Die entsprechenden Wärmeaustauscher 45, 46 sind daher mit der warmen Einlaßseite an eine Entnahmestelle 47 angeschlossen, die in der mittleren Temperaturzone 16 des Wärmespeichers 11 angeordnet ist. Bei dem in der Zeichnung dargestellten Ausführungsbeispiel sind beide Wärmeverbraucher 43, 44 mit der gleichen Entnahmestelle 47 verbunden. Es kann aber auch vorgesehen werden, daß die Wärmeverbraucher mit separaten Entnahmestellen verbunden sind, die auf unterschiedlichen Temperaturniveaus angeordnet sind. Die Rückläufe 48, 49 der Wärmeverbraucher 43, 44 mit dem abgekühlten Wärmeübertragungsmedium münden in die kalte Temperaturzone 16 des Wärmespeichers an der Einführstelle 61.

Um eine flexible Anpassung der Vorlauftemperatur für diese zusätzlichen Wärmeverbraucher 43, 44 an wechselnde Bedingungen zu ermöglichen, sind bei dem in der Zeichnung dargestellten Ausführungsbeispiel eine weitere Entnahmestelle 50 in der mittleren Temperaturzone, jedoch oberhalb der Entnahmestelle für die Verbraucher 43, 44 bei einer höheren Temperatur, und eine zusätzliche Entnahmestelle 51 in der heißen Temperaturzone 14 angeordnet. Die entsprechenden Zuläufe 52, 53 stehen über Mischeinrichtungen 54, 55 in Verbindungen mit den Vorlaufleitungen 56, 57 der Wärmeverbraucher 43, 44.

Die Mischeinrichtungen 54, 55 sind durch nicht dargestellte Steuereinrichtungen einstellbar, um das Mengenverhältnis des über die jeweiligen Entnahmestellen 50, 51 entnommenen heißeren Wärmeübertragungsmediums und das in den Vorläufen 56, 57 fließende Wärmeübertragungsmedium in Abhängigkeit von den erforderlichen Vorlauftemperaturen und/oder dem Wärmemengenbedarf einzustellen.

Bei dem in der Zeichnung dargestellten Ausführungsbeispiel sind ferner Temperaturmeßeinrichtung 58 im Wärmespeicher vorgesehen, um zumindest die Temperatur an den Entnahmestellen 51, 50, 47, 60 und/oder den Zuführstellen 36, 27, 37, 22 in der mittleren Temperaturzone 16 zu erfassen. Es kann aber auch vorgesehen werden, daß durch eine entsprechende Meßeinrichtung der Temperaturverlauf innerhalb des gesamten Wärmespeichers 11 erfaßt oder ermittelt wird. Die Temperaturmeßeinrichtungen 58 stehen in Verbindung mit den Steuereinrichtungen für die Mischeinrichtungen 54, 55 und/oder mit der Verteileinrichtung 38. Hierdurch kann einerseits erreicht werden, daß das Zuführen eines erwärmten Wärmeübertragungsmediums in die mittlere Temperaturzone an einer entsprechenden Einführstelle in Abhängigkeit von der dort im Wärmespeicher herrschenden Temperatur erfolgt. Andererseits kann erreicht werden, daß die Entnahme bzw. das Zumischen von Wärmeübertragungsmedium aus der mittleren Temperaturzone 16 in Abhängigkeit von den Bedürfnissen und den Temperaturen im Wärmespeicher erfolgt.

Bei der in der Zeichnung dargestellten Ausführungsform sind die Entnahmestellen und die Einführstellen nur schematisch dargestellt. Insbesondere sind deren Lage relativ zum Wärmespeicher einerseits und relativ zueinander nur beispielhaft. In Abhängigkeit von der exakten Auslegung einer derartigen Heizungsanlage kann es erforderlich sein, die einzelnen Entnahme- und Einführstellen an anderen Stellen, insbesondere bezüglich der relativen Lage zueinander anzuordnen.

Es ist offensichtlich, daß durch die Entnahme des Wärmeübertragungsmedium aus der mittleren Temperaturzone des Wärmeschichtspeichers eine bessere Nutzung des Wärmehaushaltes einer derartigen Heizungsanlage erfolgen kann. Insbesondere kann auf Mischeinrichtungen für ein Wärmeübertragungsmedium aus der kalten und heißen Temperaturzone verzichtet werden, wenn lediglich ein Wärmeübertragungsmedium mit einer mittleren Temperatur benötigt wird. Dadurch läßt sich insgesamt die Menge des ansonsten bereitzuhaltenden heißen Wärmeübertragungsmediums innerhalb des Speichers reduzieren.

Die Beimischung gemäß der Erfindung macht somit sämtliche lauwarmen Wasser nutzbar, weil sie aus einer unteren Schicht beigemischt werden kann.

Im ähnlichen Prinzip wie die Solaranlage oder der Abgaswärmetauscher wären so Abwärme nutzbar aus Blockheizkraftwerken, Wärmepumpen, Mischkühlanlagen, Erdwärmegewinnung mit oder ohne Wärmepumpen, Abwärme aus Industrieanlagen, welche zur Raumheizung oder Warmwasser oft noch zu kalt sind, aber für die Beimischung eines Wärmeverbrauches ausreichen und somit einen Energienutzen darstellen. Diese volle Ausnutzung ergibt sich auch, weil die Schichtung von unten nach oben stark auskühlt. Die Möglichkeit mit einem Teil voll aufzuheizen bedeutet für den Heizkessel eine lange Laufzeit und lange Stillstandzeit. Diese enorme Speizung der Zeitspannen macht den meisten Kesseln nichts aus. Sie werden nach dem Ausschalten schnell wieder kalt und haben somit nur noch wenig Auskühlverluste zum Beispiel in den Raum oder über dem Kamin, was besonders Energieeinsparungen ergibt, wenn die Abgaswärme nicht genutzt wird oder der Kessel hohe Abstrahlverluste hat. Wenn zum Beispiel nur Kesselwärmetauscher 20 vorhanden sind, ergibt dies für den Kessel einen hohen Kesselwirkungsgrad, was besonders bei Altanlagen eine enorme Energieeinsparung bedeutet.

Auch wenn bisher noch keine Abwärme- oder Solaranlage angeschlossen ist, ergeben die längeren Brennlaufzeiten und der danach kühlere Kessel schon bei vielen Anlagen eine enorme Energieeinsparung.

Der Wärmespeicher 11 könnte auch von einer Fernwärmeversorgung statt dem Heizkessel versorgt werden. Der Heizkessel wäre dann ein Wärmetauscher, bei dem die Rücklauftemperatur durch geeignete Maßnahmen (Thermisches Begrenzungsventil) begrenzt wird. Dies würde auch für die Fernwärmeleitung einen kälteren Rücklauf bedeuten. Dies würde bei diesen Anlagen auch die Solaranlage ermöglichen.

Eine große Beimengung an der unteren Schicht bedeutet, eine Überhöhung der oberen Schicht um die untere voll auszunutzen.

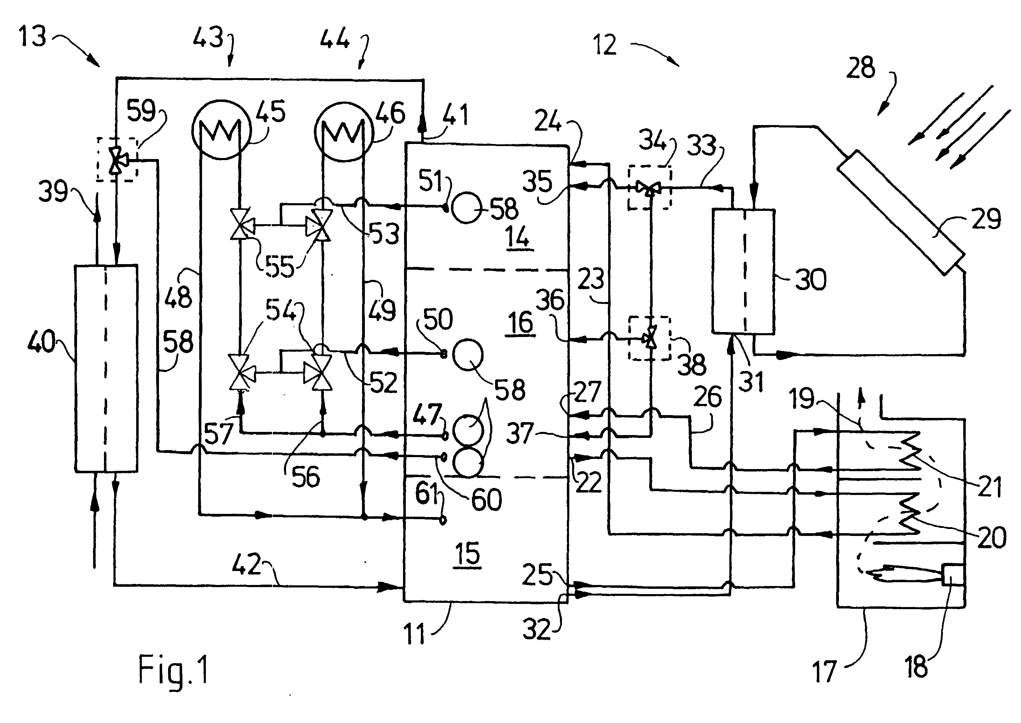

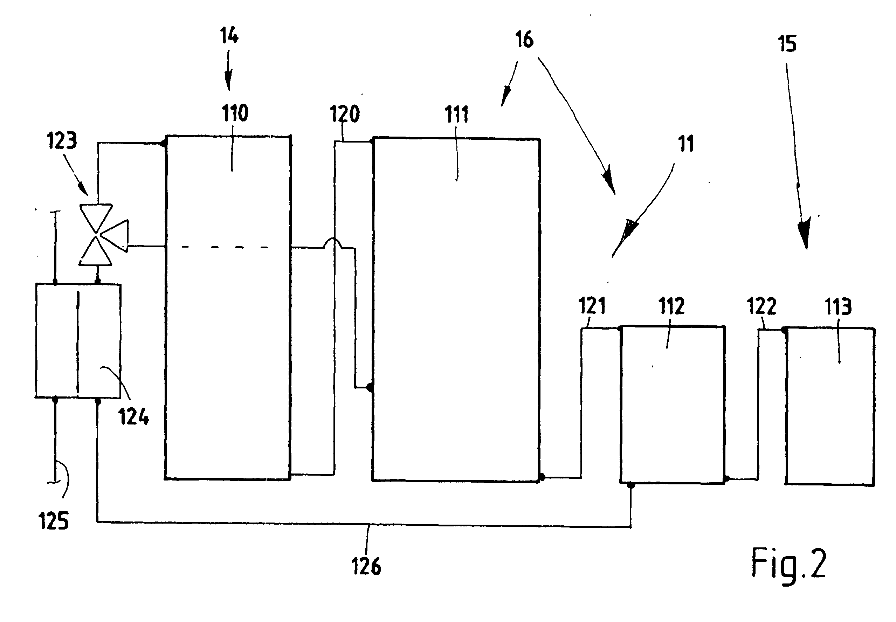

In Fig. 2 ist eine Variante der erfindungsgemäßen Heizungsanlage gezeigt. Der Wärmespeicher 11 ist hierbei in eine Mehrzahl von Teilwärmespeicher 110,111,112,113 unterteilt. Diese Teilwärmespeicher 110 bis 113 haben unterschiedliche Voluminas und sind somit den jeweiligen Bedürfnissen optimal angepaßt. Die heiße Temperaturzone 14 ist hierbei dem ersten Teilwärmespeicher 110 zugeordnet, das mittlere Temperaturintervall 116 ist hierbei den zwei mittleren Teilwärmespeichern 111,112 zugeordnet und das kalte Temperaturintervall 16 wird von dem Teilwärmespeicher 113 aufgenommen. Die Teilwärmespeicher sind durch entsprechende Verbindungsleitungen 120,121,122 miteinander derart verbunden, daß eine Kaskade entsteht, das heißt der kälteste Bereich zum Beispiel des zweiten Teilwärmespeichers 111 ist mit dem heißesten Bereich des dritten Wärmespeichers 112 durch die Leitung 121 verbunden. Dadurch wird eine sehr hohe Variabilität und Raumausnutzung erreicht. In der Regel wird sich auch in den Teilwärmespeichern eine entsprechende Schichtung einstellen, wobei diese jedoch in einem begrenzten Volumen erfolgt. Der gleiche Effekt kann zum Beispiel durch Trennwände in einem entsprechend hohen Wärmespeicher, wie in Fig. 1 angedeutet, erreicht werden.

Mit 123 ist eine Mischeinrichtung gekennzeichnet, die entweder Wärmemedium aus dem ersten Speicher 110 oder aus dem zweiten Speicher 111, und je aus einem mittleren bzw. unteren Temperaturniveau derart miteinander mischt und einem Wärmetauscher 124 für einen sekundären Kreislauf 125 bereitstellt. Der Rücklauf 126 der Primärseite des Wärmetauschers 124 ist hierbei mit dem unteren Bereich (kälteren Bereich) des Teilwärmespeichers 112 verbunden. Natürlich ist es möglich, in anderen Anwendungen den Rücklauf auf ein noch niedrigeres Temperaturniveau zu legen. Hierzu wird dann zum Beispiel der Teilwärmespeicher 113 verwendet. Es können wie dargestellt vier einzelne Teilwärmespeicher aber auch entsprechend den Gegebenheiten mehr oder weniger Teilwärmespeicher verwendet werden.

Insbesondere ist vorgesehen, daß die Temperaturgrenzen in den verschiedenen Teilwärmespeichern nicht festgelegt, sondern dynamisch veränderbar sind. Günstigerweise werden die Verbindungsleitungen zwischen den einzelnen Teilwärmespeichern durch Temperatursensoren (nicht gezeigt) überwacht. Eine intelligente Steuerung (mikroprozessorüberwacht) paßt die unterschiedlichen Temperaturgrenzen entsprechend an. Eine entsprechende Software kann noch weitere Funktionen übernehmen, zum Beispiel kann eine Nachtabsenkung oder sonstige Funktionalitäten in Abhängigkeit der Zeit vorgesehen werden. Dies gilt natürlich auch für den Betrieb der Wärmeerzeuger.

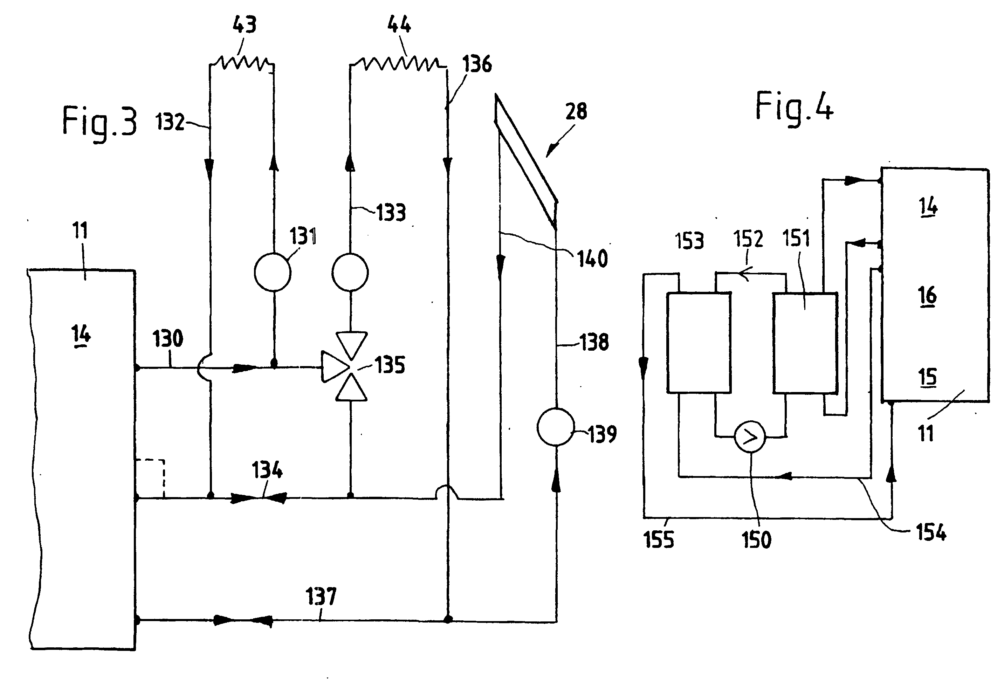

Mit Hilfe von Fig. 3 wird eine weitere erfindungsgemäße Ausgestaltung gezeigt. Die Fließrichtung des Wärmeübertragungsmediums in den verschiedenen Rohrleitungen ist mit entsprechenden Pfeilen gekennzeichnet. In dem in Fig. 3 dargestellten Beispiel werden zwei Wärmeverbraucher 43,44 betrieben. Der Wärmeverbraucher 43 benötigt eine verhältnismäßig hohe Vorlauftemperatur, weswegen der Vorlauf 130 in der verhältnismäßig heißen Temperaturzone 14 des Wärmespeichers 11 angeschlossen ist. Eine Pumpe 131 dient für die Förderung des Wärmeübertragungsmediums. Der Rücklauf 132 des Wärmeverbrauchers 43 wird nun zum Beispiel als Vorlauf 133 des nachgeschalteten Wärmeverbrauchers 44 verwendet. Hierzu mündet der Rücklauf 132 in eine Sammelleitung 134 und ist über eine Mischeinrichtung 135 mit dem Zulauf 133 verbunden. An dem Mischer 135 endet auch der Zulauf 130 über eine Abzweigung, wodurch es möglich ist, auch ein verhältnismäßig kaltes Temperaturniveau in der Sammelleitung 134 für den Vorlauf 133 wieder anzuheben. Zum Beispiel wird als Wärmeverbraucher 43 eine Heizkörperheizung vorgesehen, als Wärmeverbraucher 44 dient eine Fußbodenheizung. Der Rücklauf 136 des Wärmeverbrauchers 44 mündet in die Sammelleitung 137 und dient dort als Vorlauf 138 für eine Solaranlage 28 bzw. ein daran angeschlossener Wärmetauscher. Der Vorlauf wird angetrieben von einer Umwälzpumpe 139.

Das von der Solaranlage 28 erwärmte Wärmeübertragungsmedium wird über den Rücklauf 140 ebenfalls in die Sammelleitung 134 eingespeist und dient somit auch am Mischer 135 als Vorlauf 133 für den Wärmeverbraucher 44 mit dem geringeren Temperaturniveau.

Sowohl die Sammelleitung 134 als Vorlauf für den Wärmeverbraucher 44, als auch die Sammelleitung 137 als Rücklauf des Wärmeverbrauchers 44 sind so ausgestaltet, daß das Wärmeübertragungsmedium hierin in beiden Richtungen fließen kann. Dies ist durch die beiden gegeneinander gestellten Pfeile angedeutet. Die Fließrichtung wird letztendlich durch die Stellung des Mischers 135 wie auch der verfügbaren Wärmeniveaus bzw. Wärmeströme bestimmt. Durch eine solche Ausgestaltung, die wiederum von einem Mischer bzw. einem Doppelregler oder dergleichen Gebrauch macht, wird eine sehr effektive Ausnützung der angebotenen Wärmeenergie erreicht.

Über die Sammelleitung 134,137 wird entsprechend überschüssiges Wärmeübertragungsmedium in den Wärmespeicher zurückgegeben. Ein hier nicht gezeigtes Umsteuerventil dient hierbei dazu, den Einspeisepunkt in den Wärmespeicher 11 entsprechend flexibel einzustellen (hier gestrichelt dargestellt).

In Fig. 4 ist eine weitere Variante der erfindungsgemäßen Heizungsanlage gezeigt, daß zum Beispiel mit einer Wärmepumpe 150 das mittlere Temperaturniveau 16 in dem Wärmespeicher 11 entsprechend ausgenützt werden kann. Hierzu wird ein erster Wärmetauscher 151 primärseitig mit einem Wärmeübertragungsmedium eines zum Beispiel mittleren Temperaturniveaus gespeist und auf ein höheres Temperaturniveau erhitzt. Sekundärseitig hinter dem ersten Wärmetauscher ist eine Expander 152 vorgesehen, der zu einer Entspannung und somit zu einer Kühlung sekundärseitig führt. Das gekühlte Übertragungsmedium der Wärmepumpe wird in dem zweiten Wärmetauscher 153 mit Hilfe des Übertragungsmediums aus dem Wärmespeicher erwärmt. In dem zweiten Wärmetauscher 153 wird deswegen sekundärseitig eine Leitung 154 an das mittlere Temperaturniveau 16 des Speichers 11 angeschlossen. Diese zweite Leitung zieht hierbei Wärmeübertragungsmedium aus dem Speicher 11 bei einer Temperatur an, die gleich oder kleiner ist, als die Primärseite für den ersten Wärmetauscher 151. Durch das Erwärmen des Wärmepumpenmediums wird der Rücklauf 155 gekühlt und bei einem kälteren Temperaturniveau 15 wieder in dem Wärmespeicher 11 eingespeist. Hierdurch wird ein Temperaturniveau, das zum Beispiel von Solaranlagen in einem mittleren Temperaturniveau 16 zur Verfügung gestellt wird, auf ein entsprechend höheres Temperaturniveau 14 transferiert.

Hierbei besteht nun die Möglichkeit, die Wärmepumpe zum Beispiel mit Abwärme aus Umluft oder Stalluft, Milchkühlung, Kühlanlagen, Industrie- oder Badewasser und dergleichen anzutreiben. Gerade bei Neu- oder Umbauten können hierbei überraschende Wirkungsgradverbesserungen von Heizungsanlagen erreicht werden. Natürlich sind als Abwärmequellen auch andere Quellen denkbar.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Heizungsanlage zum Erzeugen von Heizwärme und/oder Warmwasser, mit wenigstens einem Wärmeerzeuger (12), wenigstens einem Wärmeverbraucher (40) und wenigstens einem als Schichtspeicher ausgebildeten Wärmespeicher (11) mit heißen, kalten und mittleren Temperaturzonen (14, 15, 16), wobei die heiße Temperaturzone (14) des Wärmespeichers über eine Einführstelle (24) direkt oder indirekt von dem Wärmeerzeuger beheizbar ist, und der Wärmeverbraucher direkt oder indirekt über eine Entnahmestelle (41) in der heißen Temperaturzone (14) mit Wärme beaufschlagbar ist, wobei wenigstens eine weitere Entnahmestelle (47) in der kalten (15) und/oder mittleren Temperaturzone (16) für die direkte oder indirekte Wärmebeaufschlagung wenigstens eines weiteren Wärmeverbrauchers (43, 44) vorgesehen ist, **dadurch gekennzeichnet, daß** der Wärmespeicher (11) entsprechend seinen Temperaturzonen (14,15,16) zur Unterdrückung von Konvektionsströmung in eine Mehrzahl kaskadisch geschalteter Teilwärmespeicher (110, 111, 112, 113) unterteilt ist und diese Teilwärmespeicher (110,111,112,113) mit unterschiedlichen Volumina als einzelne Teilwärmespeicher ausgebildet und durch entsprechende Verbindungsleitungen (120, 121) miteinander verbunden sind, derart, daß der jeweils kältere Bereich eines Teilwärmespeichers mit dem heißeren Bereich des folgenden Teilwärmespeichers verbunden ist.

2. Heizungsanlage nach Anspruch 1, **dadurch gekennzeichnet, daß** wenigstens ein Heizkreis (43, 44) direkt oder indirekt mit einem Wärmeübertragungsmedium aus einer Entnahmestelle (47) in der mittleren Temperaturzone (16) beaufschlagbar ist, während die Warmwasserbereitung (40) direkt oder indirekt mit einem Wärmeübertragungsmedium aus einer Entnahmestelle (41) in der heißen Temperaturzone (14) beaufschlagbar ist.

3. Heizungsanlage nach einem oder beiden der vorhergehenden Ansprüche, **dadurch gekennzeichnet, daß** die Entnahmestelle (47) in der kalten und/oder mittleren Temperaturzone über eine Mischeinrichtung (54) in Verbindung mit der Entnahmestelle (50) in der mittleren und/oder heißen Temperaturzone steht.

4. Heizungsanlage nach einem oder mehreren der vorhergehenden Ansprüche, **dadurch gekennzeichnet, daß** die Mischeinrichtung und/oder die Mischeinrichtungen (54, 55) mit wenigstens einer Steuereinrichtung in Verbindung steht bzw. stehen, um das Mischungsverhältnis der Wärmemengenströme aus den Entnahmestellen in Abhängigkeit von der benötigten Temperatur und/oder dem benötigten Wärmebedarf einzustellen.

5. Heizungsanlage nach einem oder mehreren der vorhergehenden Ansprüche, **dadurch gekennzeichnet, daß** die Steuereinrichtung mit wenigstens eine Temperaturmeßeinrichtung (58) verbunden ist, die zumindest im Bereich einer Entnahmestelle des Wärmespeichers angeordnet ist, um die Temperatur dort zu erfassen und die Mengenströme der Wärmeübertragungsmedien aus den verschiedenen Entnahmestellen in Abhängigkeit von der erfaßten Temperatur einzustellen.

6. Heizungsanlage nach einem oder mehreren der vorhergehenden Ansprüche, **dadurch gekennzeichnet, daß** der Wärmeerzeuger einen Brennwertkessel (17) aufweist, dessen letzter Wärmeaustauscher (21) in Strömungsrichtung (19) des Rauchgases zum Kondensieren der Rauchgase von einem aus der kalten Temperaturzone stammenden Wärmeübertragungsmedium gespeist wird, wobei der warme Ausgang des Wärmeaustauschers in Verbindung mit einer Einführstelle (27) für das Wärmeübertragungsmedium in der mittleren Temperaturzone (16) steht.

7. Heizungsanlage nach einem oder mehreren der vorhergehenden Ansprüche, **dadurch gekennzeichnet, daß** der Wärmeerzeuger eine Solaranlage (28) umfaßt, die wenigstens einen Wärmeaustauscher (30) aufweist, um ein aus der kalten Temperaturzone des Wärmespeichers stammendes Wärmeübertragungsmedium zu erhitzen, wobei der warme Ausgang des Wärmeaustauschers mit einer Ventileinrichtung (34) verbunden ist, an der eine Einführstelle (35) in der heißen Temperaturzone und eine Einführstelle (36, 37) in der mittleren Temperaturzone (16) des Wärmespeichers angeschlossen ist und die über eine temperaturabhängige Steuereinrichtung einstellbar ist, um das erhitzte Wärmeübertragungsmedium in Abhängigkeit von dessen Temperatur an der entsprechenden Einführstelle in den Wärmespeicher einzuleiten.

8. Heizungsanlage nach einem oder mehreren der vorhergehenden Ansprüche, **dadurch gekennzeichnet, daß** der Wärmespeicher wenigstens zwei übereinander angeordnete Einführstellen (36, 37) in der mittleren Temperaturzone (16) hat, die über eine Ventileinrichtung (38) mit einem warmen Ausgang eines Wärmeaustauschers (30) des Wärmeerzeugers (28) stehen, welche Ventileinrichtung durch eine temperaturabhängige Steuereinrichtung einstellbar ist, um die Einführstelle für das Wärmeübertragungsmedium in Abhängigkeit von dessen Temperatur auszuwählen.

9. Heizungsanlage nach einem oder mehreren der vorhergehenden Ansprüche, **dadurch gekennzeichnet, daß** ein einziges Wärmeübertragungsmedium zur Wärmebeaufschlagung der Wärmeverbraucher und zur Wärmebeaufschlagung durch den Wärmeerzeuger vorgesehen ist und/oder auch gleichzeitig die Füllung des Wärmeschichtspeichers bildet.

10. Heizungsanlage nach einem oder mehreren der vorhergehenden Ansprüche, **dadurch gekennzeichnet, daß** der Rücklauf des Wärmeerzeugers (28) unmittelbar oder mittelbar, insbesondere durch eine Mischeinrichtung (135), mit dem Zulauf (133) des Wärmeverbrauchers (44) verbunden ist.

11. Heizungsanlage nach einem oder mehreren der vorhergehenden Ansprüche, **dadurch gekennzeichnet, daß** der Rücklauf (132) eines Wärmeverbrauchers (43) unmittelbar oder mittelbar, insbesondere durch die Mischeinrichtung (135), mit dem Zulauf (133) eines weitenen Wärmeverbrauchers (44) verbunden ist.

## Claims

1. Heating installation for generating heat and/or hot water, with at least one heat generator (12), at least one heat consumer (40) and at least one heat accumulator (11) designed as layer accumulator with hot, cold and intermediate temperature zones (14, 15, 16), where the hot temperature zone (14) of the heat accumulator can be heated via a feeding spot (24) directly or indirectly by the heat generator, and the heat consumer can be impinged directly or indirectly via a tapping spot (41) in the hot temperature zone (14) with heat, where at least one other tapping spot (47) in the cold (15) and/or intermediate temperature zone (16) is provided for direct or indirect impinging with heat of at least one other heat consumer (43, 44), **characterised in that** the heat accumulator (11) is subdivided according to its temperature zones (14, 15, 16) in order to suppress the convection stream into a number of cascade-like connected partial heat accumulators (110, 111, 112, 113), and these partial heat accumulators (110, 111, 112, 113) are designed with different volumes as single partial heat accumulators and connected to each other by corresponding connection lines (120, 121) in such a way that each of the colder regions of a partial heat accumulator is connected with the hotter region of the subsequent partial heat accumulator.

2. Heating installation according to claim 1, **characterised in that** at least one heating circuit (43, 44) can be impinged directly or indirectly with a heat transfer medium out of a tapping spot (47) in the intermediate temperature zone (16), while the water heating (40) can be impinged directly or indirectly with a heat transfer medium out of a tapping spot (41) in the hot temperature zone (14).

3. Heating installation according to one or both of the preceding claims, **characterised in that** the tapping spot (47) in the cold and/or intermediate temperature zone is connected via a mixing device (54) with the tapping spot (50) in the intermediate and/or hot temperature zone.

4. Heating installation according to one or more of the preceding claims, **characterised in that** the mixing device and/or the mixing devices (54, 55) is, respectively are, connected with at least one control device in order to adjust the mixing relation of the streams of heat out of the tapping spots in dependence on the needed temperature and/or the needed heat.

5. Heating installation according to one or more of the preceding claims, **characterised in that** the control device is connected with at least one temperature measuring system (58) which is arranged at least in the region of a tapping spot of the heat accumulator in order to monitor the temperature there and to adjust the volume streams of the heat transfer media out of the different tapping spots in dependence on the registered temperature.

6. Heating installation according to one or more of the preceding claims, **characterised in that** the heat generator has a condensing boiler (17), the last heat exchanger (21) of which is fed in the direction of the stream (19) of the flue gas for condensing the flue gases by a heat transfer medium originating in the cold temperature zone, the hot exit of the heat exchanger being in connection with a feeding spot (27) for the heat transfer medium in the intermediate temperature zone (16).

7. Heating installation according to one or more of the preceding claims, **characterised in that** the heat generator comprises a solar installation (28) which at least has one heat exchanger (30) in order to heat a heat transfer medium originating in the cold temperature zone of the heat accumulator, the hot exit of the heat exchanger being connected with a valve device (34) to which a feeding spot (35) in the hot temperature zone and a feeding spot (36, 37) in the intermediate temperature zone (16) of the heat accumulator is connected to and which can be set via a temperature-dependent control device in order to introduce the heated heat transfer medium in dependence on its temperature on the corresponding feeding spot into the heat accumulator.

8. Heating installation according to one or more of the preceding claims, **characterised in that** the heat accumulator has in the intermediate temperature region (16) at least two feeding spots (36, 37) arranged one above the other which are connected via a valve device (38) with a hot exit of a heat exchanger (30) of the heat generator (28), the valve device of which can be adjusted by a temperature-dependent control device in order to select the feeding spot for the heat transfer medium in dependence on its temperature.

9. Heating installation according to one or more of the preceding claims, **characterised in that** a single heat transfer medium is provided for impinging the heat consumers with heat and for impinging with heat by the heat generator and/or it also simultaneously forms the filling of the heat layer accumulator.

10. Heating installation according to one or more of the preceding claims, **characterised in that** the return of the heat generator (28) is connected directly or indirectly, in particular by a mixing device (135) with the supply (133) of the heat consumer (44).

11. Heating installation according to one or more of the preceding claims, **characterised in that** the return (132) of a heat consumer (43) is connected directly or indirectly, in particular by the mixing device (135), with the supply (133) of another heat consumer (44).

## Revendications

1. Chauffage pour la fabrication de chaleur et/ou d'eau chaude comportant au moins un générateur de chaleur (12), au moins un utilisateur de chaleur (40) et au moins un accumulateur de chaleur (11) utilisant le principe d'accumulation en couches avec des zones de températures chaudes, froides et moyennes (14, 15, 16) dont la zone chaude (14) est chauffée directement ou indirectement par le générateur de chaleur via une entrée (24) et peut livrer sa chaleur directement ou indirectement à l'utilisateur de chaleur (40) via une sortie (41) et dont la zone froide (15) et/ou moyenne (16) est munie d'au moins une sortie (47) permettant de fournir la chaleur directement ou indirectement à au moins un autre utilisateur de chaleur (43, 44), **caractérisé en ce que** l'accumulateur de chaleur (11) est divisé en fonction de ses zones de température (14, 15, 16) et, afin de réduire des courants de convexion, en une multitude d'accumulateurs partiels (110, 111, 112, 113) enchaînés en cascade, avec des volumes différents et connectés entre eux par des tuyaux de connexion (120, 121) de telle sorte que la zone froide d'un accumulateur partiel est connectée à la zone chaude de l'accumulateur partiel suivant et ainsi de suite.

2. Chauffage selon la revendication 1, **caractérisé en ce qu'**au moins un circuit de chauffage (43, 44) peut être alimenté directement ou indirectement par un milieu calorifique d'une sortie (47) de la zone de température moyenne (16) et **en ce que** le système de chauffage pour l'eau chaude (40) est alimenté directement ou indirectement par un milieu calorifique arrivant par une sortie (41) de la zone de température chaude (14).

3. Chauffage selon une ou deux des revendications précédentes, **caractérisé en ce que** la sortie (47) de la zone de température froide et/ou moyenne est liée via un dispositif mélangeur (54) à une sortie (50) de la zone de température moyenne et/ou chaude.

4. Chauffage selon une ou plusieurs des revendications précédentes, **caractérisé en ce que** le dispositif mélangeur et/ou les dispositifs mélangeurs (54, 55) sont connectés à au moins un système de contrôle afin d'ajuster le mélange des flux calorifiques des sorties en fonction de la température et/ou de la quantité de chaleur demandée.

5. Chauffage selon une ou plusieurs des revendications précédentes, **caractérisé en ce que** le système de contrôle est connecté à au moins un appareil de mesure de température (58) situé au niveau d'au moins une sortie de l'accumulateur de chaleur afin de saisir la température à cet endroit dans le but de régler les flux du milieu calorifique des différentes sorties en fonction de la température mesurée.

6. Chauffage selon une ou plusieurs des revendications précédentes, **caractérisé en ce que** le générateur de chaleur comporte un foyer (17) ayant un dernier échangeur thermique (21) dont la position est définie par rapport au sens du mouvement (19) des fumées et qui est alimenté par un milieu calorifique venant de la zone froide afin de provoquer la condensation de ces fumées et dont la sortie chaude est connectée à une entrée (27) de la zone de température moyenne (16).

7. Chauffage selon une ou plusieurs des revendications précédentes, **caractérisé en ce que** le générateur de chaleur comporte une source de chaleur solaire (28) comportant au moins un échangeur thermique (30) qui permet de chauffer un milieu calorifique venant de la zone de température froide de l'accumulateur de chaleur et dont la sortie chaude est connectée à un dispositif à valves (34) dont une entrée (35) est liée à la zone de température chaude de l'accumulateur de chaleur et dont l'autre entrée (36, 37) est liée à la zone de température moyenne (16) et qui est réglable par un système de contrôle dépendant de la température afin d'injecter le milieu calorifique chauffé en fonction de sa température dans l'accumulateur de chaleur.

8. Chauffage selon une ou plusieurs des revendications précédentes, **caractérisé en ce que** l'accumulateur de chaleur possède au moins deux entrées (36, 37) situées l'une au-dessus de l'autre dans la zone de température moyenne (16) connectées via un dispositif à valves (38) à une sortie chaude d'un échangeur thermique (30) du générateur de chaleur (28) et **en ce que** le dispositif à valves est commandé par un système de contrôle en fonction de la température afin de diriger le milieu calorifique vers l'une des entrées.

9. Chauffage selon une ou plusieurs des revendications précédentes, **caractérisé en ce qu'**il n'existe qu'un seul milieu calorifique qui est chauffé par le générateur de chaleur et qui transmet la chaleur vers les utilisateurs de chaleur et/ou constitue en même temps le contenu de l'accumulateur de chaleur.

10. Chauffage selon une ou plusieurs des revendications précédentes, **caractérisé en ce que** la sortie du générateur de chaleur (28) est connectée directement ou indirectement et de préférence via un mélangeur (135) à l'entrée (133) de l'utilisateur de chaleur (44).

11. Chauffage selon une ou plusieurs des revendications précédentes, **caractérisé en ce que** la sortie (132) d'un utilisateur de chaleur (43) est connectée directement ou indirectement et de préférence via un mélangeur (135) à l'entrée (133) d'un autre utilisateur de chaleur (44).
